# EUROPEAN PATENT APPLICATION

(11) **EP 4 790 975 A1**
(43) Date of publication of application: **12.08.2026**
(21) Application number: 24902996.8
(22) Date of filing: 13.12.2024
(51) Int. Cl.: H04N 1/00

(54) **METHOD AND APPARATUS FOR GENERATING SCANNING RECONSTRUCTION DATA, AND NON-VOLATILE STORAGE MEDIUM**

(30) Priority: 15.12.2023 CN 202311738843; 14.05.2024 CN 202410598194; 29.05.2024 CN 202410682973
(71) Applicant: Shining 3D Tech Co., Ltd., Hangzhou, Zhejiang 311258 (CN)
(72) Inventor: ZHAO, Xiaobo, Hangzhou, Zhejiang 311258 (CN); WANG, Wenbin, Hangzhou, Zhejiang 311258 (CN); YIN, Andong, Hangzhou, Zhejiang 311258 (CN); LI, Zhouqiang, Hangzhou, Zhejiang 311258 (CN); WU, Jun, Hangzhou, Zhejiang 311258 (CN)
(74) Representative: Dehns Germany Partnerschaft mbB
(86) International application number: PCT/CN2024/139391
(87) International publication number: WO 2025/124581

(57) **Abstract**

The present invention discloses a method and apparatus for generating scan reconstruction data and a non-volatile storage medium, and relates to the field of three-dimensional scanning. The method includes: collecting, by a first scanning module, multiple frames of first scan reconstruction data of a scene where an object to be scanned is located, and synchronously collecting, by a second scanning module, multiple frames of second scan reconstruction data of the object to be scanned; stitching the multiple frames of the first scan reconstruction data to obtain a first stitching result of the object to be scanned; and stitching the multiple frames of the second scan reconstruction data based on extrinsic parameters between the first scanning module and the second scanning module, and the first stitching result to obtain a second stitching result of the object to be scanned, wherein the first stitching result is configured to provide positioning information for a stitching process of stitching the multiple frames of the second scan reconstruction data.

## Description

This application claims priority to Chinese Patent Application No.202410682973.1, entitled "Method and Apparatus for Generating Scan Reconstruction Data and Non-Volatile Storage Medium", filed with the China National Intellectual Property Administration on May 29, 2024, Chinese Patent Application No.202311738843.7, entitled "Method and Apparatus for Generating Scan Reconstruction Data and Non-Volatile Storage Medium", filed with the China National Intellectual Property Administration on December 15, 2023, and Chinese Patent Application No.202410598194.3, entitled "Method and Apparatus for Generating Scan Reconstruction Data and Non-Volatile Storage Medium", filed with the China National Intellectual Property Administration on May 14, 2024, the entire contents of which are incorporated herein by reference.

### Technical Field

The present invention relates to the field of three-dimensional scanning, and specifically, to a method and apparatus for generating scan reconstruction data and a non-volatile storage medium.

### Background

In the related art, when scanning an object, in order to obtain high-precision scan reconstruction data, it is necessary to paste marking points on the object before scanning, resulting in a time-consuming and labor-intensive scanning process. Moreover, a method for assisting scanning through the marking points still has problems about calibration of the marking points and data stitching, which is complex in operation and has high requirements for scanner users.

Currently, no effective solutions have been proposed for the above-mentioned problems.

### Summary

Embodiments of this invention provide a method and apparatus for generating scan reconstruction data and a non-volatile storage medium to at least solve a problem about a time-consuming and labor-intensive scanning process caused by a method for pasting marking points on a surface of an object to be scanned in the related art.

According to one aspect of the embodiments of the present invention, a method for generating scan reconstruction data is provided. The method including: collecting, by a first scanning module, multiple frames of first scan reconstruction data of a scene where an object to be scanned is located, and synchronously collecting, by a second scanning module, multiple frames of second scan reconstruction data of the object to be scanned; stitching the multiple frames of the first scan reconstruction data, to obtain a first stitching result of the object to be scanned; and stitching the multiple frames of the second scan reconstruction data based on extrinsic parameters between the first scanning module and the second scanning module, and the first stitching result, to obtain a second stitching result of the object to be scanned, wherein the first stitching result is configured to provide positioning information for a stitching process of stitching the multiple frames of the second scan reconstruction data.

In an embodiment, the stitching the multiple frames of the second scan reconstruction data based on the first stitching result, to obtain a second stitching result of the object to be scanned includes: determining a first stitching matrix based on the first stitching result, wherein the first stitching result includes target features, and the target features are common features between the multiple frames of the first scan reconstruction data; and stitching the multiple frames of the second scan reconstruction data based on the first stitching matrix, to obtain the second stitching result.

In an embodiment, the stitching the multiple frames of the second scan reconstruction data based on the first stitching matrix to obtain the second stitching matrix includes: determining the extrinsic parameters between the first scanning module and the second scanning module, wherein the extrinsic parameters are configured to define a transformation relationship between data collected by the first scanning module and the second scanning module; obtaining a second stitching matrix based on the extrinsic parameters and the first stitching matrix; and stitching the second scan reconstruction data based on the second stitching matrix, to obtain the second stitching result.

In an embodiment, the method for generating scan reconstruction data further including: before the collecting, by the first scanning module, the multiple frames of the first scan reconstruction data of the scene where the object to be scanned is located, and synchronously collecting, by the second scanning module, multiple frames of the second scan reconstruction data of the object to be scanned, calibrating the first scanning module and the second scanning module, and determining the extrinsic parameters between the first scanning module and the second scanning module, to unify a coordinate system of the first scanning module and the second scanning module.

In an embodiment, the method for generating scan reconstruction data further including: after obtaining the second stitching result by stitching the multiple frames of the second scan reconstruction data based on the first stitching result, performing iterative closest point optimization processing on the second stitching result, to obtain a third stitching result, wherein the third stitching result has higher data accuracy than the second stitching result.

In an embodiment, the stitching the multiple frames of the first scan reconstruction data, to obtain a first stitching result of the object to be scanned includes: stitching the multiple frames of the first scan reconstruction data by using a third stitching matrix, to obtain the first stitching result, wherein the third stitching matrix is an initial stitching matrix in the first scanning module, and the initial stitching matrix is a stitching matrix determined based on an initial pose provided by an inertial measurement unit in the first scanning module.

In an embodiment, the first scanning module includes a lidar scanning module or a time-of-flight scanning module, the second scanning module includes a structured light scanning module, and the first scan reconstruction data and the second scan reconstruction data are three-dimensional point cloud data generated based on synchronous acquisition by the first scanning module and the second scanning module.

In an embodiment, a scanning distance of the first scanning module is not less than a scanning distance of the second scanning module, wherein the scanning distance of the first scanning module ranges from 2 meters to 5 meters, and the scanning distance of the second scanning module ranges from 0.5 meters to 2 meters.

In an embodiment, a scanning range of the first scanning module and a scanning range of the second scanning module are non-overlapping, and the first scanning module scans a peripheral area of the object to be scanned.

In an embodiment, in response to the scanning range of the first scanning module overlaps with the scanning range of the second scanning module, the method for generating scan reconstruction data further including: stitching, based on common features, the first scan reconstruction data and the second scan reconstruction data acquired synchronously, to obtain third scan reconstruction data; and stitching multiple frames of third scan reconstruction data, to obtain a stitching result of the object to be scanned.

According to another aspect of the embodiments of the present invention, a three-dimensional scanner is further provided, and includes a first scanning module, a second scanning module, and a control module, wherein the first scanning module includes a lidar scanning module, and the second scanning module includes a structured light scanning module. the control module, configured to control the three-dimensional scanner to operate in a scanning mode, wherein the scanning mode of the three-dimensional scanner includes: a combined scanning mode; in the combined scanning mode, the control module controls the first scanning module to operate synchronously with the second scanning module, the first scanning module provides positioning assistance to the positioning of the second scanning module.

In an embodiment, wherein multiple scanning modes are provided, and the control module controls switching of scanning modes and controls an operation of the three-dimensional scanner based on a selected scanning mode.

In an embodiment, the scanning mode includes a lidar scanning mode, and in the lidar scanning mode, the control module controls the lidar scanning module to operate and the structured light scanning module to not operate. The scanning mode includes a structured light scanning mode, and in the structured light scanning mode, the control module controls the structured light scanning module to operate and the lidar scanning module to not operate.

In an embodiment, the three-dimensional scanner further includes a processing module, configured to acquire multiple frames of the first scan reconstruction data of an object to be scanned through the first scanning module, and acquire multiple frames of the second scan reconstruction data of the object to be scanned through the second scanning module, and in the combined scanning mode, configured to stitch the multiple frames of the first scan reconstruction data to obtain a first stitching result of the object to be scanned, and stitch the multiple frames of the second scan reconstruction data based on the first stitching result to obtain a second stitching result of the object to be scanned.

In an embodiment, a scanning distance of the first scanning module is not less than a scanning distance of the second scanning module, where the scanning distance of the first scanning module ranges from 2 meters to 5 meters, and the scanning distance of the second scanning module ranges from 0.5 meters to 2 meters.

In an embodiment, when a scanning range of the first scanning module overlaps with a scanning range of the second scanning module, a scanning band of the first scanning module is different from a scanning band of the second scanning module.

In an embodiment, the scanning range of the first scanning module does not overlap with the scanning range of the second scanning module, and a scanning direction of the first scanning module is different from a scanning direction of the second scanning module.

In an embodiment, the scanning direction of the first scanning module is perpendicular to the scanning direction of the second scanning module.

In an embodiment, the first scanning module includes a time-of-flight scanning module.

In an embodiment, the three-dimensional scanner further includes a display module, configured to display scan reconstruction data acquired by the first scanning module and scan reconstruction data acquired by the second scanning module.

According to another aspect of the embodiments of the present invention, an apparatus for generating scan reconstruction data is further provided. The apparatus includes: an acquisition module, configured to collect, by a first scanning module, multiple frames of first scan reconstruction data of a scene where an object to be scanned is located, and synchronously collect, by a second scanning module, multiple frames of second scan reconstruction data of the object to be scanned; a first processing module, configured to stitch the multiple frames of the first scan reconstruction data, to obtain a first stitching result of the object to be scanned; and a second processing module, configured to stitch the multiple frames of the second scan reconstruction data based on extrinsic parameters between the first scanning module and the second scanning module, and the first stitching result to obtain a second stitching result of the object to be scanned, wherein the first stitching result is configured to provide positioning information for a stitching process of the multiple frames of the second scan reconstruction data.

According to another aspect of the embodiments of the present invention, a non-volatile storage medium is further provided, and has a program stored therein. The program, when running, controls a device where the non-volatile storage medium is located to perform a method for generating scan reconstruction data.

According to another aspect of the embodiments of the present invention, an electronic device is further provided and includes a memory and a processor. The processor is configured to run a program stored in the memory, where the program, when running, causes a method for generating scan reconstruction data to be performed.

In the embodiments of this invention, by adopting the method that the first scanning module collects the multiple frames of the first scan reconstruction data of the scene where the object to be scanned is located, and the second scanning module synchronously collects the multiple frames of the second scan reconstruction data of the object to be scanned, wherein the scanning range of the first scanning module when collecting each frame of the first scan reconstruction data is greater than the scanning range of the second scanning module when collecting each frame of the second scan reconstruction data; the multiple frames of the first scan reconstruction data are stitched to obtain the first stitching result of the object to be scanned; and the multiple frames of the second scan reconstruction data are stitched based on the extrinsic parameters between the first scanning module and the second scanning module, and the first stitching result, to obtain the second stitching result of the object to be scanned, wherein the first stitching result is configured to provide the positioning information for the stitching process of stitching the multiple frames of the second scan reconstruction data, and by using a stitching result of the first scanning module to provide positioning for the stitching of the second scanning module, a purpose of utilizing the stitching result of the first scanning module to assist the stitching process of the second scanning module is achieved, thereby achieving a technical effect of obtaining the high-precision scan reconstruction data without pasting the marking points, and thus solving the technical problem about the time-consuming and labor-intensive scanning process caused by the method for pasting the marking points on the surface of the object to be scanned in the related art.

### Brief Description of the Drawings

The accompanying drawings described herein are used to provide a further understanding of the present invention, and form a part of the present invention. Exemplary embodiments of the present invention and descriptions thereof are used to explain the present invention, but do not constitute any inappropriate limitation to the present invention. In the accompanying drawings:
Fig. 1 is a schematic structural diagram of a three-dimensional scanner according to an embodiment of the present invention;
Fig. 2 is a schematic flowchart of a workflow of a three-dimensional scanner according to an embodiment of the present invention;
Fig. 3 is a schematic flowchart of a method for generating scan reconstruction data according to an embodiment of the present invention;
Fig. 4 is a schematic structural diagram of an apparatus for generating scan reconstruction data according to an embodiment of the present invention;
Fig. 5 is a schematic structural diagram of an electronic device according to an embodiment of the present invention.

### Detailed Description of the Embodiments

In order to make those skilled in the art better understand solutions of the present invention, the technical solutions in embodiments of the present invention are clearly and completely described in conjunction with the accompanying drawings in the embodiments of the present invention as below, and it is apparent that the described embodiments are merely a part rather all the embodiments of the present invention. Based on the embodiments of the present invention, all other embodiments obtained by those of ordinary skill in the art without creative labor shall fall within the scope of protection of the present invention.

It should be noted that the terms such as "first" and "second" of the specification and claims of the present invention and the above-mentioned accompanying drawings are used to distinguish similar objects but are not necessarily intended to describe sequences or precedence orders. It should be understood that such used data is interchangeable where appropriate, such that the embodiments of the present invention described herein can be implemented in orders other than those illustrated or described herein. In addition, the terms "include", "have", and any variations thereof are intended to encompass non-exclusive inclusions. For example, a process, a method, a system, a product, or a device including a series of steps or units is not necessarily limited to those explicitly-listed steps or units, but may include other steps or units that are not explicitly listed or inherent to the process, the method, the system, the product, or the device.

In the related art, when an object to be scanned is scanned, multiple marking points typically need to be manually pasted on a surface of the object to be scanned, resulting in an overall scanning process that takes a long time and is time-consuming and labor-intensive. Moreover, the multiple marking points also increase the scanning cost of the scanning process, and problems about calibration of the marking points and transfer stitching exist, leading to the complex scanning process. In order to solve the problems, the embodiments of the present invention provide relevant solutions, which are described in detail as below.

According to an embodiment of the present invention, a method embodiment for generating scan reconstruction data is provided. It should be noted that steps shown in flowcharts of the accompanying drawings may be performed in a computer system, such as a set of computer-executable instructions. Moreover, although a logical sequence is shown in the flowcharts, the steps shown or described may be performed in a sequence different from that shown herein in some cases.

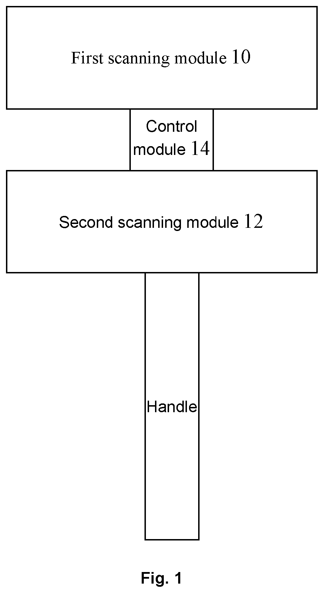

The method embodiment provided by the embodiments of the present invention is performed in a mobile terminal, a computer terminal, or a similar arithmetic unit. For example, the method embodiment is performed in a scanner as shown in Fig. 1. Fig. 1 is a schematic structural diagram of a scanner with two scanning modules. As can be seen from Fig. 1, the scanner includes a first scanning module 10, a second scanning module 12, and a control module 14. The first scanning module 10 includes a lidar scanning module, and the second scanning module 12 includes a structured light scanning module. The control module 14 is configured to control a three-dimensional scanner to operate in a scanning mode, wherein the scanning mode of the three-dimensional scanner includes: a combined scanning mode. In the combined scanning mode, the control module 14 controls the first scanning module 10 to operate synchronously with the second scanning module 12. The first scanning module 10 is configured to assist the positioning of the second scanning module 12.

In some embodiments of this invention, multiple scanning modes are provide, and the control module controls switching of scanning modes and controls an operation of the three-dimensional scanner based on a selected scanning mode.

In an embodiment, the scanning mode includes a lidar scanning mode, and in the lidar scanning mode, the control module controls the lidar scanning module to operate and the structured light scanning module to not operate. The scanning mode includes a structured light scanning mode, and in the structured light scanning mode, the control module controls the structured light scanning module to operate and the lidar scanning module to not operate.

In some embodiments of the present invention, the three-dimensional scanner further includes a processing module, configured to acquire multiple frames of first scan reconstruction data of an object to be scanned through the first scanning module, and acquire multiple frames of second scan reconstruction data of the object to be scanned through the second scanning module, and in the combined scanning mode, configured to stitch the multiple frames of the first scan reconstruction data to obtain a first stitching result of the object to be scanned, and stitch the multiple frames of the second scan reconstruction data according to the first stitching result to obtain a second stitching result of the object to be scanned.

In some embodiments of the present invention, a scanning distance of the first scanning module 10 is not less than a scanning distance of the second scanning module 12, wherein the scanning distance of the first scanning module 10 ranges from 2 meters to 5 meters, and the scanning distance of the second scanning module 12 ranges from 0.5 meters to 2 meters.

When a scanning range of the first scanning module 10 overlaps with a scanning range of the second scanning module 12, a scanning band of the first scanning module 10 is different from a scanning band of the second scanning module 12.

In some embodiments of the present invention, a scanning range of the first scanning module 10 does not overlap with the scanning range of the second scanning module 12, a scanning direction of the first scanning module 10 is different from a scanning direction of the second scanning module 12, and the scanning direction of the first scanning module 10 is opposite or perpendicular to the scanning direction of the second scanning module 12, or the scanning direction of the first scanning module 10 and the scanning direction of the second scanning module 12 are set to a relative angle such that the scanning ranges of the first scanning module 10 and the second scanning module 12 do not overlap. For example, the first scanning module 10 scans an area above the three-dimensional scanner, the second scanning module 12 scans an area in front of the three-dimensional scanner, or the first scanning module 10 scans the front area, and the second scanning module 12 scans the upper area.

In an embodiment, the front area of the three-dimensional scanner is automatically set. For example, a direction of the three-dimensional scanner toward the object to be scanned is set to the front of the three-dimensional scanner.

In some embodiments of the present invention, the scanning range of the first scanning module 10 and the scanning range of the second scanning module 12 do not overlap, the first scanning module 10 scans the area in front of the three-dimensional scanner and the second scanning module 12 scans an area behind the three-dimensional scanner; or the first scanning module 10 scans the rear area, and the second scanning module 12 scans the front area.

In some embodiments of the present invention, the first scanning module 10 includes: a time-of-flight scanning module.

In some embodiments of the present invention, the three-dimensional scanner further includes a display module, configured to display scan reconstruction data acquired by the first scanning module 10 and the second scanning module 12.

In an embodiment, in the combined scanning mode, when scanning the object to be scanned, the first scanning module 10 and the second scanning module 12 perform scanning synchronously, the first scanning module 10 scans a scene where the object to be scanned is located, and the second scanning object scans the object to be scanned. Then, scan reconstruction data of the first scanning module 10 is stitched first, and a stitching matrix with higher accuracy is constructed based the stitching result. Subsequently, scan reconstruction data of the second scanning module is stitched based on the newly obtained stitching matrix. It should be noted that the first scanning module and the second scanning module are relatively fixed in the scanning process but have different acquisition fields of view, to reduce interference between the first scanning module and the second scanning module. For example, the first scanning module faces a scene around the object to be scanned, and the second scanning module faces the object to be scanned. In this case, use bands of the first scanning module and the second scanning module are not limited, and the same band or different bands may be adopted. Of course, the first scanning module and the second scanning module may also have the same acquisition field of view or have overlapping acquisition fields of view. In this case, the use bands of the first scanning module and the second scanning module may be bands that do not interfere with each other. For example, the use band of the first scanning module is invisible infrared light, and the use band of the second scanning module is visible light, to reduce the interference between the first scanning module and the second scanning module.

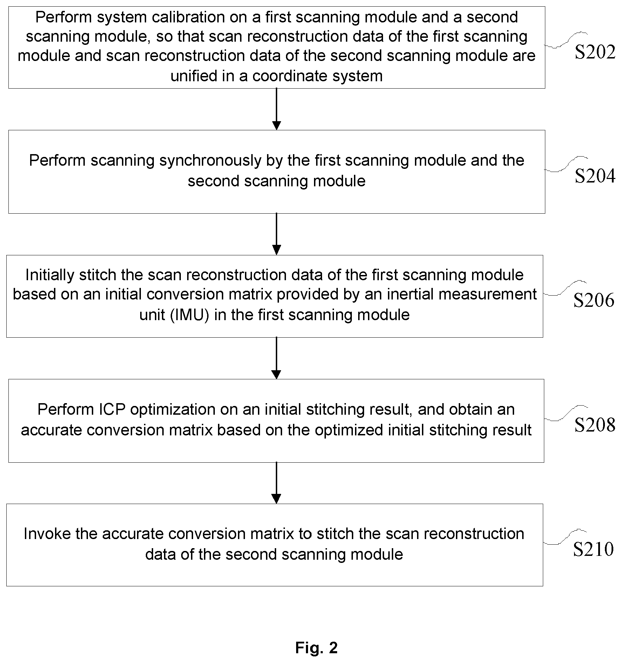

In some embodiments of the present invention, the complete workflow of the above-mentioned scanner is shown in Fig. 2, including the following steps:
Step S202: system calibration is performed on the first scanning module and the second scanning module, so that scan reconstruction data of the first scanning module and scan reconstruction data of the second scanning module are unified in a coordinate system.
Step S204: scanning is performed synchronously by the first scanning module and the second scanning module.
Step S206: scan reconstruction data of the first scanning module is initially stitched based on an initial conversion matrix provided by an inertial measurement unit (IMU) in the first scanning module.
Step S208: Iterative Closest Point (ICP) optimization is performed on an initial stitching result, and an accurate conversion matrix is obtained based on an optimized initial stitching result.
S210: the accurate conversion matrix is invoked to stitch the scan reconstruction data of the second scanning module, that is, in a process of stitching the scan reconstruction data of the second scanning module, positioning is performed based on the stitching result of the first scanning module.

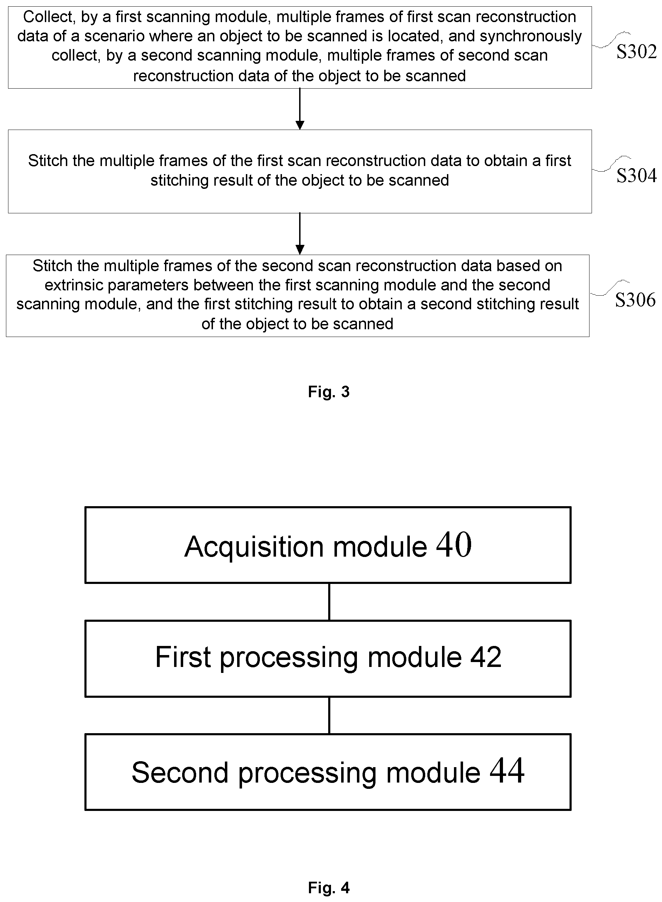

In the above-mentioned operating environment, an embodiment of the present invention provides a method for generating scan reconstruction data. As shown in Fig. 3, the method includes the following steps:
Step S302: by the first scanning module, multiple frames of first scan reconstruction data of a scene where an object to be scanned is located are collected, and by the second scanning module, multiple frames of second scan reconstruction data of the object to be scanned are collected synchronously.

In some embodiments of the present invention, the first scanning module includes the lidar scanning module or the time-of-flight (TOF) scanning module. The second scanning module includes the structured light scanning module. The first scanning module also has the built-in inertial measurement unit (IMU), and uses initial pose information provided by the IMU to determine an initial stitching matrix for roughly stitching the scan reconstruction data of the first scanning module. It should be noted that the first scan reconstruction data and the second scan reconstruction data are scan reconstruction data (i.e., 3D images) generated by three-dimensional reconstruction based on 2D images synchronously collected by the first scanning module and the second scanning module, namely, three-dimensional point cloud data. The data collected by the first scanning module includes the first scan reconstruction data and the 2D image, and the data collected by the second scanning module includes the second scan reconstruction data and the 2D image. The multiple frames of the first scan reconstruction data collected by the first scanning module includes the three-dimensional point cloud data of the object to be scanned and the scenario where the object to be scanned is located, and the multiple frames of the second scan reconstruction data collected by the second scanning module includes the three-dimensional point cloud data of the object to be scanned.

In the solution provided in the step S302, before the first scanning module collects the multiple frames of the first scan reconstruction data of the scene where the object to be scanned is located, and the second scanning module collects the multiple frames of the second scan reconstruction data of the object to be scanned, the first scanning module and the second scanning module are calibrated, and extrinsic parameters between the first scanning module and the second scanning module is determined after calibration, to unify a coordinate system for the first scanning module and the second scanning module.

In an embodiment, the first scanning module and the second scanning module are calibrated, and the extrinsic parameters between the first scanning module and the second scanning module are acquired through calibration for determining a transformation relationship between the scan reconstruction data collected by the first scanning module and the scan reconstruction data collected by the second scanning module; that is, the scan reconstruction data of the first scanning module and the scan reconstruction data of the second scanning module are unified in the coordinate system, thereby facilitating subsequent construction of the stitching matrix of the second scanning module by using the scan reconstruction data of the first scanning module.

In an embodiment, the scanning distance of the first scanning module is greater than the scanning distance of the second scanning module. For example, the scanning distance of the first scanning module ranges from 2 meters to 5 meters, and the scanning distance of the second scanning module ranges from 0.5 meters to 2 meters.

Step S304: the multiple frames of the first scan reconstruction data are stitched to obtain a first stitching result of the object to be scanned.

In the solution provided in the step S304, the step of the multiple frames of the first scan reconstruction data are stitched to obtain a first stitching result of the object to be scanned includes: the multiple frames of the first scan reconstruction data are stitched by using a third stitching matrix to obtain the first stitching result, wherein the third stitching matrix is an initial stitching matrix of the multiple frames of the first scan reconstruction data collected and generated by the first scanning module, and the initial stitching matrix is a stitching matrix determined based on the inertial measurement unit (IMU) in the first scanning module; that is, the inertial measurement unit (IMU) in the first scanning module continuously collects multiple poses of the first scanning module during a scanning movement process, and determines the stitching matrix between the corresponding multiple frames of the first scan reconstruction data based on the multiple poses as the initial stitching matrix between the multiple frames of the first scan reconstruction data.

For example, the first scanning module is moved to a first pose, the first pose is collected and generated by the inertial measurement unit (IMU) of the first scanning module, and first scan reconstruction data A is collected and generated by the first scanning module. The first scanning module is moved to a second pose, the second pose is collected and generated by the inertial measurement unit (IMU) of the first scanning module, and first scan reconstruction data B is collected and generated by the first scanning module. A pose change matrix of the first scanning module in a moving scanning process can be determined based on the first pose and the second pose collected and generated by the inertial measurement unit (IMU), and the pose change matrix is used as an initial stitching matrix between the first scan reconstruction data A and the first scan reconstruction data B.

In an embodiment, the first scan reconstruction data is the three-dimensional point cloud data obtained by three-dimensional reconstruction based on the 2D image collected by the first scanning module, namely, the scan reconstruction data. After obtaining the multiple frames of three-dimensional point cloud data, rough stitching may be performed based on multiple initial stitching matrices generated by collected data of the IMU built in the first scanning module to obtain the first stitching result, and iterative closest point (ICP) optimization processing refinement optimization is performed on the first stitching result after the rough stitching to improve the data accuracy of a rough stitching result (i.e., the first stitching result), thereby obtaining multiple first stitching matrices between the multiple frames of the first scanning reconstructed data, namely, final stitching matrices obtained after the rough stitching and refinement optimization between the multiple frames of the first scanning reconstructed data.

It should be noted that one frame of first scan reconstruction data of the lidar scanning module is a set or a partial set of points generated by scanning a complete field of view (FOV) at one time. When two adjacent frames of the first scan reconstruction data are stitched, the pose information provided by the IMU is configured to determine the initial stitching matrix for stitching.

In an embodiment, the lidar scanning module emits multiple laser points to form laser lines during scanning, and performs rendering in a preset exposure cycle to allow the laser lines to scan over a certain area to obtain a surface. In other words, data collected by the lidar scanning module in one exposure cycle are considered to be obtained by stitching data corresponding to the multiple laser lines. When lidar stitches the data collected in the same exposure cycle, data stitching may be performed by relying on a mechanical optical device of the lidar scanning module. For scan reconstruction data corresponding to different exposure cycles, the pose information provided by the IMU are configured to determine the initial stitching matrix for stitching, and subsequent optimization, such as iterative closest point optimization is performed.

Step S306: the multiple frames of the second scan reconstruction data are stitched based on the extrinsic parameters between the first scanning module and the second scanning module, and the first stitching result to obtain a second stitching result of the object to be scanned, wherein the first stitching result is configured to provide positioning information for a stitching process of stitching the multiple frames of the second scan reconstruction data.

In the solution provided in the step S306, the step of the multiple frames of the second scan reconstruction data are stitched based on the extrinsic parameters between the first scanning module and the second scanning module, and the first stitching result to obtain a second stitching result of the object to be scanned includes: a first stitching matrix is determined based on the first stitching result, wherein the first stitching result includes target features, and the target features are common features between the multiple frames of the first scan reconstruction data; and the second scan reconstruction data is stitched based on the first stitching matrix to obtain the second stitching result. It should be noted that the target features are generally target geometric features.

In an embodiment, since the first stitching result includes abundant geometric features, which are helpful for stitching optimization, the geometric features of the first stitching result are configured to further optimize the first stitching result to determine a final stitching matrix between the multiple frames of the first scan reconstruction data (namely, the first stitching matrix), and the first stitching matrix is configured to stitch the second scan reconstruction data, that is, to provide positioning in the process of stitching the second scan reconstruction data.

In an embodiment, the step of the second scan reconstruction data is stitched based on the extrinsic parameters between the first scanning module and the second scanning module, and the first stitching matrix to obtain a second stitching result includes: the extrinsic parameters are determined between the first scanning module and the second scanning module, wherein the extrinsic parameters are configured to define a transformation relationship between the data collected by the first scanning module and the second scanning module; a second stitching matrix is obtained based on the extrinsic parameters and the first stitching matrix; and the second scan reconstruction data is stitched based on the second stitching matrix to obtain the second stitching result.

In an embodiment, the extrinsic parameters represent a relative pose relationship between the first scanning module and the second scanning module. The transformation relationship refers to a transformation relationship between the data collected by the first scanning module and the data collected by the second scanning module. By determining the transformation relationship between the data collected by the two scanning modules, a transformation relationship between the stitching matrix of the multiple frames of data collected by the first scanning module and the stitching matrix of the multiple frames of data collected by the second scanning module is determined. Accordingly, the first stitching matrix corresponding to the first scanning module is converted into the second stitching matrix corresponding to the second scanning module through respective calibration data (i.e., the extrinsic parameters) of the two scanning modules.

When the second stitching matrix is determined, a pose matrix of the first scanning module relative to a reference coordinate system is determined based on the extrinsic parameters and the first stitching matrix. It should be noted that the first scanning module and the second scanning module both correspond to the same reference coordinate system. Then, a pose transformation relationship of the second scanning module relative to the reference coordinate system is determined based on the extrinsic parameters. Then, based on the pose matrix of the first scanning module and the pose transformation relationship of the second scanning module relative to the reference coordinate system, the transformation relationship between the stitching matrices of the first scanning module and the second scanning module is determined, and then the second stitching matrix is obtained based on the transformation relationship between the stitching matrices of the first scanning module and the second scanning module and the first stitching matrix.

In an embodiment, the data collected by the second scanning module includes a structured light image modulated by the object to be scanned. In an embodiment, the second scanning module projects a preset structured light image onto the object to be scanned, and then collects the structured light image modulated and deformed by the object to be scanned. Then, three-dimensional point cloud data are obtained based on a deformation condition of the structured light image. After the three-dimensional point cloud data is obtained, the second stitching matrix is invoked to stitch the three-dimensional point cloud data to obtain the second stitching result. It should be noted that the structured light image is a dot structured light image, a line structured light image, or a plane structured light image, such as a raster image.

In some embodiments of the present invention, after the second scan reconstruction data is stitched based on the first stitching result to obtain the second stitching result, Iterative Closest Point (ICP) optimization processing is performed on the second stitching result to obtain a third stitching result, wherein the third stitching result has higher data accuracy than the second stitching result.

In an embodiment, when the first scanning module and the second scanning module adopt a time-of-flight (TOF) technology, stitching is implemented without the need for the IMU. In an embodiment, in the scanning process of scanning a target object, after the first scanning module collects the data, 3D matching and stitching are directly performed with a previous frame of data or overall frame data of the object to be scanned, thereby obtaining a rough stitching matrix M0. Real-time ICP optimization is performed based on geometric features of the target object contained in the collected data, thereby obtaining a more accurate scenario stitching matrix M1. Then, the M1 and the calibration data are calculated, thereby converting into a stitching matrix M2 of the second scanning module.

When stitching the collected scanning data, the second scanning module first performs real-time rough stitching based on the stitching matrix M2, and performs ICP refinement processing on the stitching result based on the collected data to obtain a stitching result with higher accuracy. After all the data scanning and collection are completed, the stitching result of the second scanning module at this time is globally optimized and fused, so that a complete high-detail scanning result of the target object can be obtained without pasting points on a surface of the target object, and the detail integrity and high precision of the scanning result are guaranteed.

In addition, when TOF scanning is used, a scanning depth-of-field distance is closer compared to lidar, resulting in higher data quality. Therefore, when a requirement for overall data details is low and a requirement for details and accuracy of a partial area is high, data in a corresponding area in the first scanning module may be directly replaced by the scanning data in the second scanning module, thereby implementing the detailing of partial data.

It should be noted that when acquiring one frame of scan reconstruction data, the TOF scanning module and the lidar scanning module both continuously collect the scan reconstruction data of the object to be scanned many times in a preset time cycle, and then stitch all the data in the time cycle into one frame of scan reconstruction data. However, the stitching referred to in the embodiments of the present invention refers to stitching of the scan reconstruction data between different frames, and does not involve stitching of intra-frame data.

In summary, based on the method for generating scan reconstruction data provided in the embodiments of the present invention, the first scanning module and the second scanning module synchronously collect the scan reconstruction data of a large scene (e.g., the scene where the object to be scanned is located) and a small scene (e.g., the object to be scanned), the scan reconstruction data collected by the first scanning module is roughly stitched based on the initial stitching matrix determined based on measurement data of the built-in IMU of the first scanning module, and then real-time ICP optimization is performed on the rough stitching result based on the geometric features of the object to be scanned in the rough stitching result, that is, the stitching matrix M1 having higher accuracy than the initial stitching matrix is obtained based on the optimized rough stitching result. M1 represents the final stitching matrix of the scan reconstruction data collected by the first scanning module.

After M1 is obtained, calculation is performed based on the respective calibration data (i.e., the extrinsic parameters) of the first scanning module, the second scanning module and M1, and the stitching matrix M2 corresponding to the scan reconstruction data collected by the second scanning module is obtained. The stitching matrix M2 is configured to stitch the scan reconstruction data collected by the second scanning module and then perform ICP refinement processing on the stitching result, to obtain high-precision three-dimensional scan reconstruction data of the small scene. Then, global optimization and fusion are performed on all the three-dimensional reconstruction data of the small scene, to obtain high-precision three-dimensional scan reconstruction data of the small scene.

In some embodiments of the present invention, in addition to determining the stitching matrix for stitching the second scan reconstruction data collected by the second scanning module through the first scan reconstruction data collected by the first scanning module, the second scan reconstruction data is guided for stitching by the first scan reconstruction data in a different method based on whether the scanning ranges of the first scanning module and the second scanning module overlap.

In an embodiment, when the scanning range of the first scanning module and the scanning range of the second scanning module are non-overlapping, the first scanning module scans a peripheral area of the object to be scanned, and the second scanning module scans the object to be scanned, a first position change relationship of the first scanning module when acquiring the first scan reconstruction data of different frames may be determined in the process of stitching the first scanning data; a second position change relationship of the second scanning module when acquiring the second scan reconstruction data of different frames is determined based on a relative position relationship between the first scanning module and the second scanning module; and the multiple frames of the second scan reconstruction data are stitched based on the second position change relationship to obtain the second stitching result of the object to be scanned.

It should be noted that the above-mentioned position change relationship is embodied by the stitching matrix. For example, the first position change relationship is embodied by the first stitching matrix, and the second position change relationship is embodied by the second stitching matrix.

When the scanning range of the first scanning module and the scanning range of the second scanning module are overlap, the first scan reconstruction data and the second scan reconstruction data acquired synchronously are stitched based on the common feature to obtain third scan reconstruction data; and multiple frames of third scan reconstruction data are stitched to obtain a stitching result of the object to be scanned.

In addition, it should be noted that the finally obtained scan reconstruction data includes the first scan reconstruction data scanned by the first scanning module and the second scan reconstruction data scanned by the second scanning module, or includes only the second scan reconstruction data scanned by the second scanning module. When the scanning range of the first scanning module and the scanning range of the second scanning module are non-overlapping, the scan reconstruction data is obtained by stitching the second scan reconstruction data scanned by the second scanning module. When the scanning range of the first scanning module and the scanning range of the second scanning module are overlapping, the scan reconstruction data is obtained by stitching the first scan reconstruction data scanned by the first scanning module and the second scan reconstruction data scanned by the second scanning module. In an embodiment, when the scanning range of the first scanning module and the scanning range of the second scanning module are overlapping, a common feature area in the first scan reconstruction data with the second scan reconstruction data is replaced by the second scan reconstruction data.

In an embodiment, when the scanning range of the first scanning module and the scanning range of the second scanning module are overlapping, the first scanning module and the second scanning module have different scanning bands to avoid mutual interference between the first scanning module and the second scanning module.

It can be seen that by adopting the method for generating scan reconstruction data provided in the embodiments of the present invention, the high-precision scan reconstruction data is obtained without pasting the marking points, thereby reducing the manpower consumption and scanning cost of the scanning process.

Moreover, by adopting the method that the first scanning module collects the multiple frames of the first scan reconstruction data of the scene where the object to be scanned is located, and the second scanning module collects the multiple frames of the second scan reconstruction data of the object to be scanned; the multiple frames of the first scan reconstruction data are stitched to obtain the first stitching result of the object to be scanned; and the multiple frames of the second scan reconstruction data are stitched based on the extrinsic parameters between the first scanning module and the second scanning module, and the first stitching result, to obtain the second stitching result of the object to be scanned, wherein the first stitching result is configured to provide the positioning information for the stitching of the second scan reconstruction data, and by using the stitching result of the first scanning module to provide positioning for the stitching of the second scanning module, a purpose of utilizing the first scanning module to assist the stitching of the second scanning module is achieved, thereby achieving a technical effect of obtaining the high-precision scan reconstruction data without pasting the marking points, and thus solving the technical problem about the time-consuming and labor-intensive scanning process caused by the method for pasting the marking points on the surface of the object to be scanned in the related art.

An embodiment of the present invention provides an apparatus for generating scan reconstruction data. Fig. 4 is a schematic structural diagram of the apparatus. As shown in Fig. 4, the apparatus includes: an acquisition module 40, configured to collect, by a first scanning module, multiple frames of first scan reconstruction data of a scene where an object to be scanned is located, and synchronously collect, by a second scanning module, multiple frames of second scan reconstruction data of the object to be scanned; a first processing module 42, configured to stitch the multiple frames of the first scan reconstruction data, to obtain a first stitching result of the object to be scanned; and a second processing module 44, configured to stitch the multiple frames of the second scan reconstruction data based on extrinsic parameters between the first scanning module and the second scanning module, and the first stitching result to obtain a second stitching result of the object to be scanned, wherein the first stitching result is configured to provide positioning information for the stitching of the multiple frames of the second scan reconstruction data.

In some embodiments of the present invention, the first scanning module includes a lidar scanning module or a time-of-flight scanning module. The second scanning module includes a structured light scanning module. The first scan reconstruction data and the second scan reconstruction data are three-dimensional point cloud data generated based on synchronous acquisition by the first scanning module and the second scanning module

In some embodiments of the present invention, before the first scanning module collects the multiple frames of the first scan reconstruction data of the object to be scanned, and the second scanning module collects the multiple frames of the second scan reconstruction data of the object to be scanned, the apparatus for generating the scan reconstruction data is further configured to calibrate the first scanning module and the second scanning module, and determine the extrinsic parameters between the first scanning module and the second scanning module, to unify a coordinate system for the first scanning module and the second scanning module.

In some embodiments of the present invention, the first processing module 42 splicing the multiple frames of the first scan reconstruction data to obtain a first stitching result of the object to be scanned includes: stitching the multiple frames of the first scan reconstruction data by using a third stitching matrix to obtain the first stitching result, wherein the third stitching matrix is an initial stitching matrix in the first scanning module, and the initial stitching matrix is a stitching matrix determined based on an initial pose provided by an inertial measurement unit in the first scanning module.

In some embodiments of the present invention, the second processing module 44 stitching the multiple frames of the second scan reconstruction data based on extrinsic parameters between the first scanning module and the second scanning module, and the first stitching matrix to obtain a second stitching result of the object to be scanned includes: determining a first stitching matrix based on the first stitching result, wherein the first stitching result includes target features, and the target features are common features between the multiple frames of the first scan reconstruction data; and stitching the multiple frames of the second scan reconstruction data based on the extrinsic parameters between the first scanning module and the second scanning module, and the first stitching matrix to obtain the second stitching result.

In some embodiments of the present invention, the second processing module 44 stitching the multiple frames of the second scan reconstruction data based on extrinsic parameters between the first scanning module and the second scanning module, and the first stitching result to obtain a second stitching result includes: determining the extrinsic parameters between the first scanning module and the second scanning module, wherein the extrinsic parameters are configured to define a transformation relationship between the data collected by the first scanning module and the second scanning module; obtaining a second stitching matrix based on the extrinsic parameters and the first stitching matrix; and stitching the second scan reconstruction data based on the second stitching matrix to obtain the second stitching result.

In some embodiments of the present invention, after stitching the multiple frames of the second scan reconstruction data based on the first stitching result to obtain the second stitching result, the second processing module 44 is further configured to perform iterative closest point optimization processing on the second stitching result to obtain a third stitching result, wherein the third stitching result has higher data accuracy than the second stitching result.

In some embodiments of the present invention, a scanning distance of the first scanning module is not less than a scanning distance of the second scanning module, where the scanning distance of the first scanning module ranges from 2 meters to 5 meters, and the scanning distance of the second scanning module ranges from 0.5 meters to 2 meters.

In some embodiments of the present invention, a scanning range of the first scanning module and a scanning range of the second scanning module are non-overlapping, and the first scanning module scans a peripheral area of the object to be scanned. The apparatus for generating the scan reconstruction data is further configured to: determine a first position change relationship of the first scanning module when acquiring the first scan reconstruction data of different frames in the process of stitching the first scanning data; determine a second position change relationship of the second scanning module when acquiring the second scan reconstruction data of different frames based on a relative position relationship between the first scanning module and the second scanning module; and stitch the multiple frames of the second scan reconstruction data based on the second position change relationship to obtain the second stitching result of the object to be scanned.

In some embodiments of the present invention, in response to the scanning range of the first scanning module overlaps with the scanning range of the second scanning module, the apparatus for generating the scan reconstruction data is further configured to: stitch, based on the common feature, the first scan reconstruction data and the second scan reconstruction data acquired synchronously to obtain third scan reconstruction data; and stitch multiple frames of third scan reconstruction data to obtain a stitching result of the object to be scanned.

It should be noted that each module in the above-mentioned apparatus for generating the scan reconstruction data may be a program module (e.g., a set of program instructions for implementing a function) or a hardware module, and the latter may have the following form, but is not limited to: each of the above-mentioned modules is represented by one processor, or the functions of each of the above-mentioned modules are implemented by one processor.

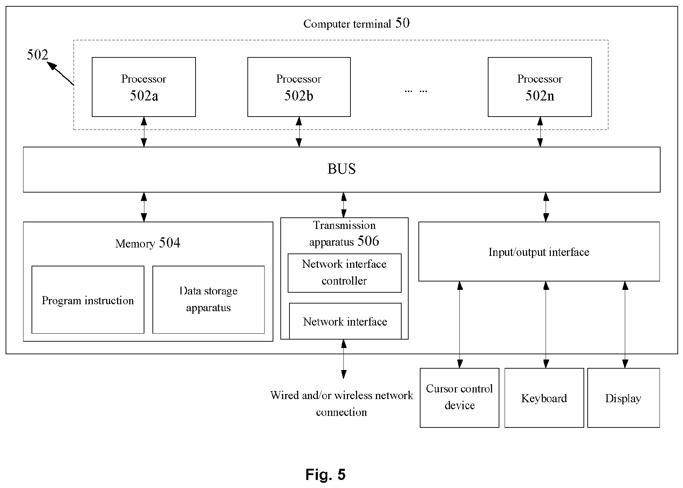

Fig. 5 illustrates a block diagram of a hardware structure of an electronic device for implementing a method for generating scan reconstruction data. The electronic device may be a computer terminal or a mobile device. As shown in Fig. 5, the computer terminal 50 (or the mobile device 50) may include at least one (which are illustrated as 502a, 502b, ..., and 502n in the Fig. 5) processors 502 (the processors 502 may include, but are not limited to, a microcontroller unit (MCU), a programmable logic device like a field programmable gate array (FPGA), or other processing apparatuses), a memory 504 configured to store data, and a transmission apparatus 506 configured for a communication function. In addition, a display, an input/output interface (I/O interface), a universal serial bus (USB) port (which may be included as one of ports of the bus), a network interface, a power supply, and/or a camera may also be included. Those of ordinary skill in the art may understand that the structure shown in Fig. 5 is merely illustrative, and does not limit the structure of the electronic device. For example, the computer terminal 50 may further include more or fewer components than those shown in Fig. 5, or have configurations different from those shown in Fig. 5.

It should be noted that the at least one processors 502 described above and/or other data processing circuits may be generally referred to as "data processing circuits" in the present invention. The data processing circuit may be embodied fully or partially as software, hardware, firmware, or any other combination. In addition, the data processing circuit may be a single stand-alone processing module or integrated fully or partially into any one of other components in the computer terminal 50 (or the mobile device). As involved in the embodiments of the present invention, the data processing circuit functions as a processor control (e.g., selecting a variable resistor terminal path connected to the interface).

The memory 504 may be configured to store software programs and modules of application software, such as program instructions/a data storage apparatus corresponding to the method for generating scan reconstruction data in the embodiments of the present invention. The processor 502 performs, by running the software programs and the modules stored in the memory 504, various functional applications and data processing, thereby implementing the above-mentioned method for generating scan reconstruction data. The memory 504 may include a high-speed random access memory, and may also include a non-volatile memory, such as at least one magnetic storage apparatuses, flash memories, or other nonvolatile solid-state memories. In some examples, the memory 504 may further include memories remotely disposed relative to the processor 502, and these remote memories may be connected to the computer terminal 50 through networks. The examples of the above-mentioned networks include, but are not limited to, an Internet, an intranet, a local area network, a mobile communication network, and a combination thereof.

The transmission apparatus 506 is configured to receive or send data via one network. An example of the above-mentioned networks may include a wireless network provided by a communication supplier of the computer terminal 50. In an example, the transmission apparatus 506 includes a network interface controller (NIC), which may be connected with another network device through a base station, so as to communicate with the Internet. In an example, the transmission apparatus 506 may be a radio frequency (RF) module, which is configured to communicate with the Internet in a wireless manner.

The display may be, for example, a touchscreen liquid crystal display (LCD), which may allow the user to interact with a user interface of the computer terminal 50 (or the mobile device).

An embodiment of the present invention further provides a non-volatile storage medium. The non-volatile storage medium has a program stored therein. The program, when running, causes the following method for generating scan reconstruction data to be performed: collect, by a first scanning module, multiple frames of first scan reconstruction data of an object to be scanned, and collect, by a second scanning module, multiple frames of second scan reconstruction data of the object to be scanned; stitch the multiple frames of the first scan reconstruction data to obtain a first stitching result of the object to be scanned; and stitch the multiple frames of the second scan reconstruction data based on extrinsic parameters between the first scanning module and the second scanning module, and the first stitching result to obtain a second stitching result of the object to be scanned, wherein the first stitching result is configured to provide positioning information for a stitching process of stitching the multiple frames of the second scan reconstruction data.

In the above-mentioned embodiments of the present invention, the embodiments are described with respective focuses. For a part that is not described in detail in an embodiment, refer to related descriptions in other embodiments.

In the several embodiments provided in the present invention, it should be understood that the disclosed technical content may be implemented in other manners. The apparatus embodiments described above are merely illustrative, such as the unit division which may be a logical function division, and during practical implementation, there may be additional division manners. For example, multiple units or components may be combined or integrated into another system, or some features may be ignored or not executed. In addition, the shown or discussed mutual coupling or direct coupling, or communication connection may be an indirect coupling or communication connection through some interfaces, units, or modules, or may be in an electrical form or other forms.

The units described as separate components may or may not be physically separated, and components displayed as units may or may not be physical units, that is, may be located in one position, or may be distributed over multiple units. Some or all of the units may be selected according to actual needs to achieve the objectives of the solutions of the embodiments.

In addition, functional units in the embodiments of the present invention may be integrated into one processing unit, or the units may exist physically separately, or two or more units may be integrated into one unit. The above-mentioned integrated unit may be implemented in the form of hardware or a software functional unit.

When the integrated unit is implemented in the form of the software functional unit and sold or used as an independent product, the integrated unit may be stored in a computer-readable storage medium. Based on such understanding, the solutions of the present invention essentially, or the part contributing to the related art, or all or some of the technical solutions may be embodied in the form of a software product. The computer software product is stored in a storage medium and includes multiple instructions for allowing a computer device (which may be a personal computer, a server, or a network device) to perform all or some of the steps of the methods described in the embodiments of the present invention. The above-mentioned storage medium includes: a U disk, a read-only memory (ROM), a random access memory (RAM), a mobile hard disk, a magnetic disk, an optical disk, or other media capable of storing program code.

The above-mentioned contents are merely preferred implementations of this invention. It should be noted that multiple improvements and modifications may also be made by those of ordinary skill in the art without departing from the principle of this invention, and these improvements and modifications should also be considered within the scope of protection of this invention.

### Industrial applicability

The solutions provided in the embodiments of the present invention may be applied to the field of three-dimensional scanning. In the embodiments of the present invention, by adopting the method that the first scanning module collects the multiple frames of the first scan reconstruction data of the scene where the object to be scanned is located, and the second scanning module synchronously collects the multiple frames of the second scan reconstruction data of the object to be scanned; the multiple frames of the first scan reconstruction data are stitched to obtain the first stitching result of the object to be scanned; and the multiple frames of the second scan reconstruction data are stitched based on the extrinsic parameters between the first scanning module and the second scanning module, and the first stitching result, to obtain the second stitching result of the object to be scanned, a technical effect of obtaining the high-precision scan reconstruction data without pasting marking points is achieved.

## Claims

1. A method for generating scan reconstruction data, comprising:
collecting, by a first scanning module, multiple frames of first scan reconstruction data of a scene where an object to be scanned is located, and synchronously collecting, by a second scanning module, multiple frames of second scan reconstruction data of the object to be scanned;
stitching the multiple frames of the first scan reconstruction data, to obtain a first stitching result of the object to be scanned;
stitching the multiple frames of the second scan reconstruction data based on extrinsic parameters between the first scanning module and the second scanning module, and the first stitching result, to obtain a second stitching result of the object to be scanned.

2. The method for generating scan reconstruction data as claimed in claim 1, wherein the stitching the multiple frames of the second scan reconstruction data based on extrinsic parameters between the first scanning module and the second scanning module, and the first stitching result, to obtain a second stitching result of the object to be scanned comprises:
determining a first stitching matrix based on the first stitching result, wherein the first stitching result comprises target features, and the target features are common features between the multiple frames of the first scan reconstruction data;
stitching the multiple frames of the second scan reconstruction data based on the extrinsic parameters between the first scanning module and the second scanning module, and the first stitching matrix, to obtain the second stitching result.

3. The method for generating scan reconstruction data as claimed in claim 2, wherein the stitching the multiple frames of the second scan reconstruction data based on the extrinsic parameters between the first scanning module and the second scanning module, and the first stitching matrix, to obtain the second stitching result comprises:
determining the extrinsic parameters between the first scanning module and the second scanning module, wherein the extrinsic parameters are configured to define a transformation relationship between data collected by the first scanning module and data collected by the second scanning module;
obtaining a second stitching matrix based on the extrinsic parameters and the first stitching matrix;
stitching the second scan reconstruction data based on the second stitching matrix, to obtain the second stitching result.

4. The method for generating scan reconstruction data as claimed in claim 1, the method for generating scan reconstruction data further comprising:
collecting, by the first scanning module, the multiple frames of the first scan reconstruction data of the scene where the object to be scanned is located, and synchronously collecting, by the second scanning module, the multiple frames of the second scan reconstruction data of the object to be scanned.

5. The method for generating scan reconstruction data as claimed in claim 1, the method for generating scan reconstruction data further comprising:
after obtaining the second stitching result by stitching the multiple frames of the second scan reconstruction data based on the first stitching result, performing iterative closest point optimization processing on the second stitching result, to obtain a third stitching result, wherein the third stitching result has higher data accuracy than the second stitching result.

6. The method for generating scan reconstruction data as claimed in claim 1, wherein the stitching the multiple frames of the first scan reconstruction data, to obtain a first stitching result of the object to be scanned comprises:
stitching the multiple frames of the first scan reconstruction data by using a third stitching matrix, to obtain the first stitching result, wherein the third stitching matrix is an initial stitching matrix in the first scanning module, and the initial stitching matrix is a stitching matrix determined based on an initial pose provided by an inertial measurement unit in the first scanning module.

7. The method for generating scan reconstruction data as claimed in claim 1, wherein the first scanning module comprises a lidar scanning module or a time-of-flight scanning module, the second scanning module comprises a structured light scanning module, and the first scan reconstruction data and the second scan reconstruction data are three-dimensional point cloud data generated based on synchronous acquisition by the first scanning module and the second scanning module.

8. The method for generating scan reconstruction data as claimed in claim 1, wherein a scanning distance of the first scanning module is not less than a scanning distance of the second scanning module, the scanning distance of the first scanning module ranges from 2 meters to 5 meters, and the scanning distance of the second scanning module ranges from 0.5 meters to 2 meters.

9. The method for generating scan reconstruction data as claimed in claim 1, wherein a scanning range of the first scanning module and a scanning range of the second scanning module are non-overlapping, and the first scanning module scans a peripheral area of the object to be scanned.

10. The method for generating scan reconstruction data as claimed in claim 1, wherein in response to the scanning range of the first scanning module overlaps with the scanning range of the second scanning module , the method for generating scan reconstruction data further comprises:
stitching, based on common features, the multiple frames of the first scan reconstruction data and the multiple frames of the second scan reconstruction data acquired synchronously, to obtain third scan reconstruction data;
stitching multiple frames of the third scan reconstruction data, to obtain a stitching result of the object to be scanned.

11. A three-dimensional scanner, comprising a first scanning module, a second scanning module, and a control module, wherein
the first scanning module comprises a lidar scanning module, and the second scanning module comprises a structured light scanning module;
the control module, configured to control the three-dimensional scanner to operate in a scanning mode, wherein the scanning mode of the three-dimensional scanner comprises: a combined scanning mode;
in the combined scanning mode, the control module controls the first scanning module to operate synchronously with the second scanning module, and the first scanning module provides positioning assistance to the positioning of the second scanning module.

12. The three-dimensional scanner as claimed in claim 11, wherein multiple scanning modes are provided, and the control module controls switching of scanning modes and controls an operation of the three-dimensional scanner based on a selected scanning mode.

13. The three-dimensional scanner as claimed in claim 11, wherein the scanning mode comprises a lidar scanning mode, and in the lidar scanning mode, the control module controls the lidar scanning module to operate and the structured light scanning module to not operate; and the scanning mode comprises a structured light scanning mode, and in the structured light scanning mode, the control module controls the structured light scanning module to operate and the lidar scanning module to not operate.

14. The three-dimensional scanner as claimed in claim 11, wherein the three-dimensional scanner further comprising:
a processing module, configured to acquire multiple frames of first scan reconstruction data of an object to be scanned through the first scanning module, and acquire multiple frames of second scan reconstruction data of the object to be scanned through the second scanning module, and in the combined scanning mode, configured to stitch the multiple frames of the first scan reconstruction data to obtain a first stitching result of the object to be scanned, and stitch the multiple frames of the second scan reconstruction data based on the first stitching result to obtain a second stitching result of the object to be scanned.

15. The three-dimensional scanner as claimed in claim 11, wherein a scanning distance of the first scanning module is not less than a scanning distance of the second scanning module, wherein the scanning distance of the first scanning module ranges from 2 meters to 5 meters, and the scanning distance of the second scanning module ranges from 0.5 meters to 2 meters.

16. The three-dimensional scanner as claimed in claim 11, wherein when a scanning range of the first scanning module and a scanning range of the second scanning module overlapping, a scanning band of the first scanning module is different from a scanning band of the second scanning module.

17. The three-dimensional scanner as claimed in claim 11, wherein when the scanning range of the first scanning module does not overlap with the scanning range of the second scanning module, a scanning direction of the first scanning module is different from a scanning direction of the second scanning module.

18. The three-dimensional scanner as claimed in claim 17, wherein the scanning direction of the first scanning module is perpendicular to the scanning direction of the second scanning module.

19. The three-dimensional scanner as claimed in claim 11, wherein the first scanning module comprises a time-of-flight scanning module.

20. The three-dimensional scanner as claimed in claim 11, the three-dimensional scanner further comprising:
a display module, configured to display scan reconstruction data acquired by the first scanning module and scan reconstruction data acquired by the second scanning module.

21. An apparatus for generating scan reconstruction data, comprising:
an acquisition module, configured to collect, by a first scanning module, multiple frames of first scan reconstruction data of a scene where an object to be scanned is located, and synchronously collect, by a second scanning module, multiple frames of second scan reconstruction data of the object to be scanned;
a first processing module, configured to stitch the multiple frames of the first scan reconstruction data to obtain a first stitching result of the object to be scanned; and
a second processing module, configured to stitch the multiple frames of the second scan reconstruction data based on extrinsic parameters between the first scanning module and the second scanning module, and the first stitching result to obtain a second stitching result of the object to be scanned.

22. A non-volatile storage medium, in which a program is stored, wherein the program, when running, controls a device where the non-volatile storage medium is located to perform the method for generating scan reconstruction data according to any one of claims 1 to 10.

23. An electronic device, comprising a memory and a processor, the processor, configured to run a program stored in the memory, wherein the program, when running, causes the method for generating scan reconstruction data according to any one of claims 1 to 10 to be performed.
